# EUROPEAN PATENT SPECIFICATION

(11) **EP 2 113 472 B1**
(45) Date of publication and mention of the grant of the patent: **13.07.2011**
(21) Application number: 08008340.5
(22) Date of filing: 02.05.2008
(51) Int. Cl.: B65G 1/04, B65G 1/137

(54) **System and process for the storage and handling of products, in particular packed products**
System und Verfahren zur Speicherung und Handhabung von Produkten, insbesondere von verpackten Produkten
Système et procédé de stockage et de manipulation de produits, en particulier des produits emballés

(43) Date of publication of application: 04.11.2009
(73) Proprietor: von Liechtenstein, Alexander, 9497 Triesenberg (LI)
(72) Inventor: von Liechtenstein, Alexander, 9497 Triesenberg (LI)
(74) Representative: Lunati, Vittoriano

(56) References cited:
- EP-A- 1 806 301
- DE-A1- 3 100 020
- DE-A1- 4 336 885
- DE-U1- 20 122 458

## Description

The present invention relates to a system and a process for the storage and handling of products, in particular packaged products.

A system of this type has one or more shelf units consisting of shelves positioned above one another and side by side, on which the products to be stored for a certain period of time and then withdrawn selectively on request are deposited.

The system is provided with at least one handling device, suitable for taking the individual products from a sorting area, transferring them and depositing them on the shelves and withdrawing them from the shelves, when required, to take them or send them to a delivery or withdrawal area.

The system operates in an automated manner, the handling device being controlled by means of a computer with program in which the products to be stored are memorised and which imparts to the handling device the translatory and rotary movements necessary each time for individually taking the products from the sorting area, transferring them and depositing them on the shelves, or for withdrawing them selectively from the shelves and conveying them to the place of delivery.

The handling device can be moved horizontally and vertically along the shelf unit to reach all the shelves. In the case of several shelf units, the latter are arranged parallel to one another with a respective corridor in-between, in which the handling device moves, configured to serve the shelves facing onto the corridor.

The shelves can have different heights according to the size of the products. In a known system of this type, the products or individual packages of products are first measured in three dimensions, hence they are identified, the dimensions are transmitted to the computer in the form of a relative signal and on the basis of this signal the position in which to deposit the product is determined, taking account of the height of the shelf and maximum exploitation of the working space in the warehouse.

In this known system, the products are arranged exclusively side by side on the shelves, therefore never on top of one another, and the position in which each product is deposited is memorised in the computer. The computer is then able to retrieve each individual product from the warehouse according to its position memorised each time.

This system allows for optimal exploitation of the available space, as each product is stored in a space corresponding exactly to the dimensions of the product. This means that in a warehouse with the same working surface area, a greater number of products can be stored.

In this way, however, the products are arranged chaotically, in the sense that identical or similar products can be positioned in different and/or distant locations. In other words, a given product can be located in any point of the warehouse, known only to the computer.

Since each product is stored and retrieved individually, the handling device has to perform a specific forward stroke and backward stroke for each individual product, in both the storage phase and withdrawal phase.

When several products are required simultaneously, therefore, the handling device has to perform as many forward and backward strokes as there are products required, even in the case of identical products.

Such a system is therefore very slow and in many cases involves particularly long waiting times for the delivery of several products required simultaneously. Due to the chaotic arrangement of the products in the warehouse, the known system involves a very complex electronic control.

In the event of a computer failure, it is practically impossible to manually obtain the product required, as its position in the warehouse is not known.

Another system and process for the storage and handling of products, in particular packaged products, is known from DE-U1-201 22 458, and is of the type specified in the preamble of appended claims 1 and 6, respectively.

This known system comprises distinct shelf modules for storing products required more frequently and/or in greater quantities per order, so called high turnover products, and products required less frequently and/or in a lesser quantity per order, so called low turnover products.

In order to accelerate withdrawal and delivery of the high turnover products, this known system comprises at least one computer controlled additional product withdrawing device movable along a portion of a shelf on the side thereof opposite to that on which a computer controlled handling device provided for storing and withdrawing low turnover products is movable along the whole shelf.

The additional product withdrawing device is exclusively intended for withdrawing high turnover products and is associated with a respective shelf module only. The storing of the high turnover products in said shelf module is instead carried out by the handling device, for instant by night.

In this way the additional withdrawing device can operate simultaneously with the handling device moving on the other side of the shelf and can withdraw high turnover products more rapidly than before without interfering with the working of the handling device.

However, this known system requires so many additional product withdrawing devices how many are the shelf modules storing high turnover products, so remarkably complicating the structure as the available variety of high turnover products increases.

In this situation the technical aim of the present invention is to devise a system and a process for the storage and handling of products, in particular packaged products, able to substantially remedy the drawbacks referred to.

In the context of this technical aim, an important object of the invention is to provide a system and a process of the above-mentioned type which speed up in particular the product retrieval operations.

Another important object of the invention is to make available a system and a process with a simpler structure and operation than those of the known system. A further object of the invention is a system and a process that have greater flexibility in terms of product arrangement and management.

Lastly, a further object of the invention is a product handling system that provides a high but simplified storage capacity.

The technical aim and the objects specified are substantially achieved by a system and/or a process for the storage and handling of products, in particular packaged products, as claimed respectively in the attached claims 1 and 6. Preferred embodiments of the invention are highlighted in the dependent claims.

The invention thus discriminates between "high turnover" products, i.e. products required more frequently and/or in greater quantities per order, and "low turnover" products, i.e. products required less frequently and/or in a lesser quantity per order, and allocates to each of these two product classes at least one respective distinct surface area of the warehouse.

In this way, since it is reasonable to assume that the high turnover products are required, at least on average, in quantities of two or more at a time and represent a higher or much higher percentage than that of the low turnover products, it is possible to considerably speed up overall retrieval and delivery of the products, the handling device being able to perform, in the majority of cases, one single forward and backward stroke to simultaneously withdraw and deliver a greater number of products required, instead of performing a forward and backward stroke for each product required, as occurs in the known technique. Advantageously it is possible to further speed up retrieval of the products required by positioning the storage surface or surfaces of the high turnover products nearer the delivery area, which reduces the path of the handling means and therefore also the overall product retrieval and delivery time.

Further characteristics and advantages of the invention are better clarified below in the detailed description of some preferred embodiments of the invention, with reference to the accompanying drawings, in which:

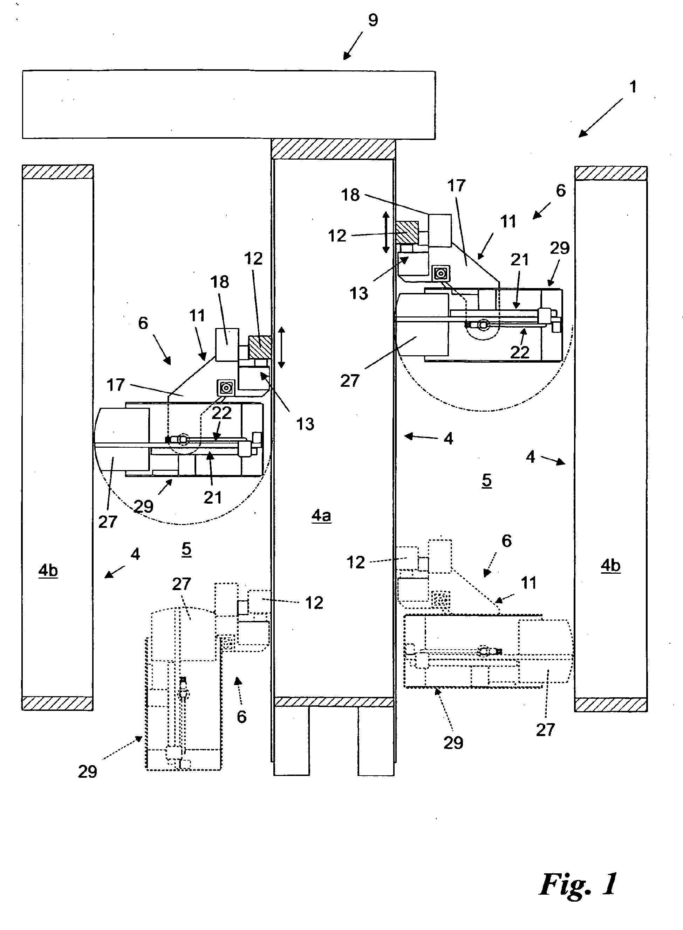

**Fig. 1** shows a simplified plan view of a system according to the invention in a preferred embodiment;
**Fig. 2** illustrates a lateral elevation of the system of **Fig. 1****;**
**Fig. 3** highlights on an enlarged scale a lateral view of a handling device and a possible system for discharge of the products to be conveyed to the delivery area;
**Fig. 4** shows schematically a further embodiment of a system according to the invention.

A system **1** according to the invention, suitable for the storage and handling of products **2,** in particular packaged products, for example in parallelepiped-shaped boxes, comprises at least one surface **3** for storage of the products **2.**

In particular the surface **3** can consist of a shelf. Preferably a plurality of shelves are provided arranged above one another to form a shelf unit **4,** it being possible to space the shelves at different heights from one another. For the sake of simplicity, only some of the shelves are shown in the drawings. Advantageously more than one shelf unit **4** is provided, in particular two or more shelf units **4** arranged parallel to one another and defining between them respective corridors **5.**

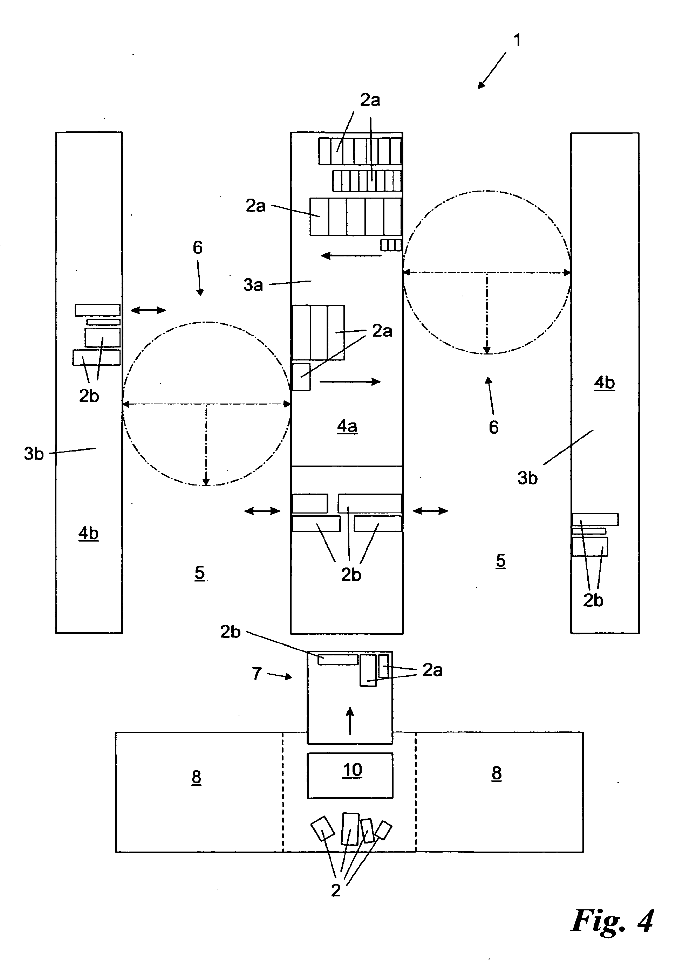

The system furthermore comprises at least one handling device **6,** suitable for taking the products **2** from a sorting area **7 (****Fig. 4****)** and depositing them on the above-mentioned storage surface 3 or on the shelves, and selectively withdrawing the products from the storage surface **3** or from the shelves and transferring them to at least one delivery area **8 (****Fig. 4****).**

The handling device **6** moves, in a per se known manner, alongside a shelf unit **4** or in the corridor **5** defined between two parallel shelf units **4.**

The device **6** is controlled by an electronic control unit **9,** positioned for example near one end of a shelf unit **4.** The unit **9** is suitable for imparting to the handling device **6**, in an automated manner, the various movements necessary for storage of the products **2** and retrieval thereof from the warehouse, as will be seen in further detail below.

The electronic control unit **9** is furthermore suitable, in a per se known manner, for memorising the positions of the individual products 2 deposited in the warehouse by the handling device **6.**

In the sorting area **7,** means **10 (****Fig. 4****)** are furthermore positioned, in a per se known manner, for identification of the individual products **2** to be stored, said means being operatively connected to the electronic control unit **9.** More specifically each product **2** is identified either according to its dimensions or its name or other elements, for example the barcode, and memorised in the memory of the computer forming part of the electronic control unit **9.**

According to one aspect of the invention, the products **2** identified are grouped substantially into two categories: "high turnover" products **2a,** i.e. products required more frequently and/or in greater quantities, and "low turnover" products **2b,** i.e. products required less often and/or in lesser quantities.

In the system according to the present invention, the electronic control unit **9,** using a database present in the unit itself, is suitable for determining, for each of the products **2** identified to be stored, whether it belongs to the class of high turnover products **2a** or the class of low turnover products **2b.**

At least one first storage surface **3a** is furthermore provided, suitable for housing in a selectively grouped manner high turnover products **2a,** and at least one second distinct storage surface **3b** suitable for housing low turnover products **2b.**

The handling device 6 is controlled by the electronic unit **9** for selectively depositing the high turnover products **2a** on said at least one first surface **3a** and the low turnover products **2b** on said at least one second surface **3b.**

The products **2a** can for example be grouped according to homogeneity or similarity, or according to name (for example in alphabetical order) or according to barcode, or on the basis of other criteria.

The products **2b** can also be grouped according to homogeneity or similarity or according to name or barcode, or on the basis of other appropriate criteria.

In the example described and illustrated, a plurality of said first surfaces **3a** is provided, arranged above one another to form a plurality of shelves of a shelf unit **4a,** positioned centrally, and a plurality of said second surfaces **3b,** arranged above one another to form a plurality of shelves of two shelf units **4b,** positioned at the side of the central shelf unit **4a,** parallel to the same, with interposition of respective corridors **5,** in which respective handling devices 6 move, suitable for serving the central shelf unit 4a from opposite sides and one of the lateral shelf units **4b** respectively.

The shelves of each shelf unit **4a** and **4b** are preferably arranged spaced at different heights from one another and the distances between one shelf and another are generally calculated so as to contain products of different heights, with a margin of space sufficient to easily permit deposit and retrieval of the respective products **2a** or **2b.**

Preferably the shelf unit **4a** has a length approximately equal to the length of the shelf units **4b** and a width greater than the width of the shelf units **4b,** for example almost double. The overall height of the shelf units **4a** and **4b** is substantially the same.

Advantageously the width of the first surfaces **3a** of the central shelf unit **4a** is such as to house, beside one another, a plurality of high turnover products 2a, arranged with their larger dimension substantially parallel to the length of said first surfaces **3a.** The packages of the high turnover products **2a** therefore follow one another in groups of several products in the lengthways direction of the shelves, as can be seen in the drawings.

The width of the second surfaces **3b** of the lateral shelf units **4b** is suitable for housing, beside one another, a plurality of products **2b** positioned with their larger dimension substantially parallel to the width of said second surfaces **3b.** The packages of low turnover products **2b** therefore follow one another individually in the lengthways direction of the shelves, as can be seen in the drawings.

In the example illustrated in the accompanying drawings, two handling devices 6 are provided, positioned on opposite sides of the central shelf unit 4a. According to the invention, each handling device **6** is suitable for selectively withdrawing both high turnover products 2a and low turnover products **2b.**

It comprises a supporting structure generically indicated by the number **11,** which is sustained by an upright **12** and slides along the upright 12 in both directions, operated by drive means **13.** In this way the structure 11 can be height-adjusted in both directions to a plurality of positions, corresponding to the various shelves of the shelf units **4a** and **4b.**

Each upright **12** can in turn be moved horizontally along the shelf unit **4a,** being driven by the drive means **14,** positioned along the lower part of the shelf unit **4a.** Each upright **12** is furthermore guided horizontally by a lower guide system **15** and by an upper guide system **16.** The means **14** can be operated in both directions. In this way each structure **11** can be moved horizontally along the shelf unit 4a in both directions.

Operation of the upright **12** and the structure **11** is controlled by the electronic control unit 9 so as to position each time the structure **11** at a point of the shelves of the shelf units **4a** and **4b** according to a pre-selected program for storage of the products **2a** and **2b** or according to the retrieval requirements of the products **2a** and **2b** and so as to position the structure **11** in the delivery area 8, after selectively withdrawing the product or products **2a** and/or 2b required each time.

The supporting structure 11 of each handling device 6 substantially comprises an arm **17,** protruding horizontally from a guide body **18,** connected by geometric coupling to the upright 12 to slide along said upright.

At the free end of the arm 17, a supporting element **20** is fitted to revolve around a vertical axis **19;** said supporting element develops in a substantially vertical direction and bears at the top a handling body indicated overall by **21,** which develops in a substantially horizontal direction and bears at least one gripper element **22** for engaging the products **2a, 2b.**

The gripper element **22** is substantially of the suction cup type, consisting of a tubular body **23** bent substantially at right angles, with the shorter part directed vertically and fixed to a guide coupling **24** and the longer part directed horizontally and terminating in two or more suction nozzles **25,** of the per se known type. The suction takes place through the tubular body **23** and a duct (not shown), connected to the tubular body **23** at the point corresponding to the guide coupling **24.**

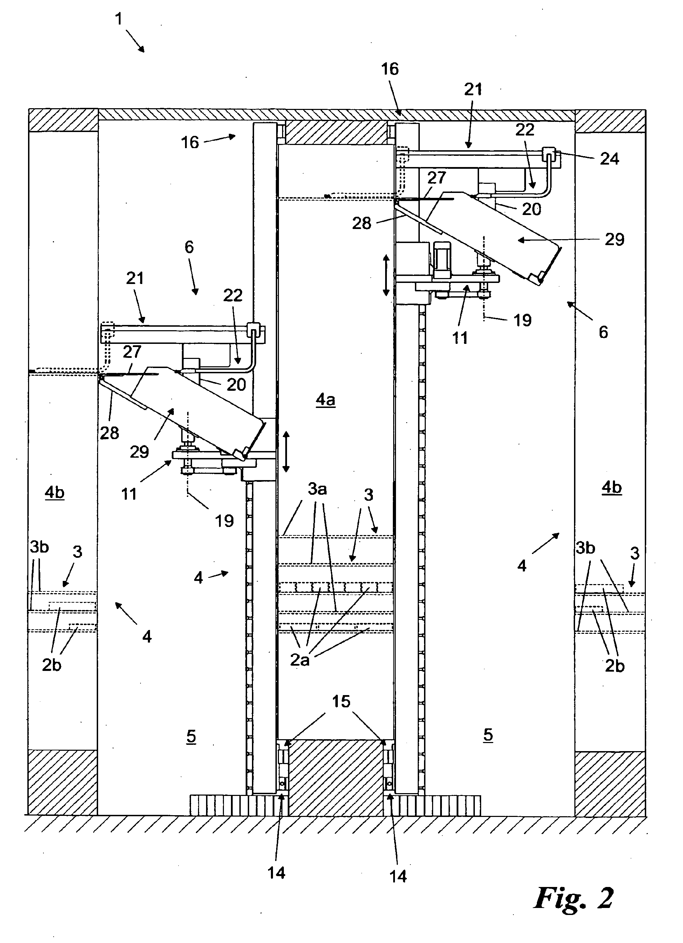

The coupling **24** slides on command on a substantially horizontal guide **26,** fixed to the body 21. In this way the gripper **22** can be moved on command between two positions, indicated in Fig. 2 by a continuous and broken line respectively, by drive means not shown, to move the products **2a, 2b** respectively to and from each of the storage surfaces **3a, 3b.**

The supporting structure **11** furthermore comprises a supporting surface **27** for the products **2a, 2b,** in particular suitable for receiving one product at a time. The surface **27** is supported by a slanting arm **28,** fixed to the bottom of a collecting container **29** for the products **2a, 2b,** which is fixed to the rotatable supporting element **20** and is suitable for containing a plurality of products **2a, 2b.**

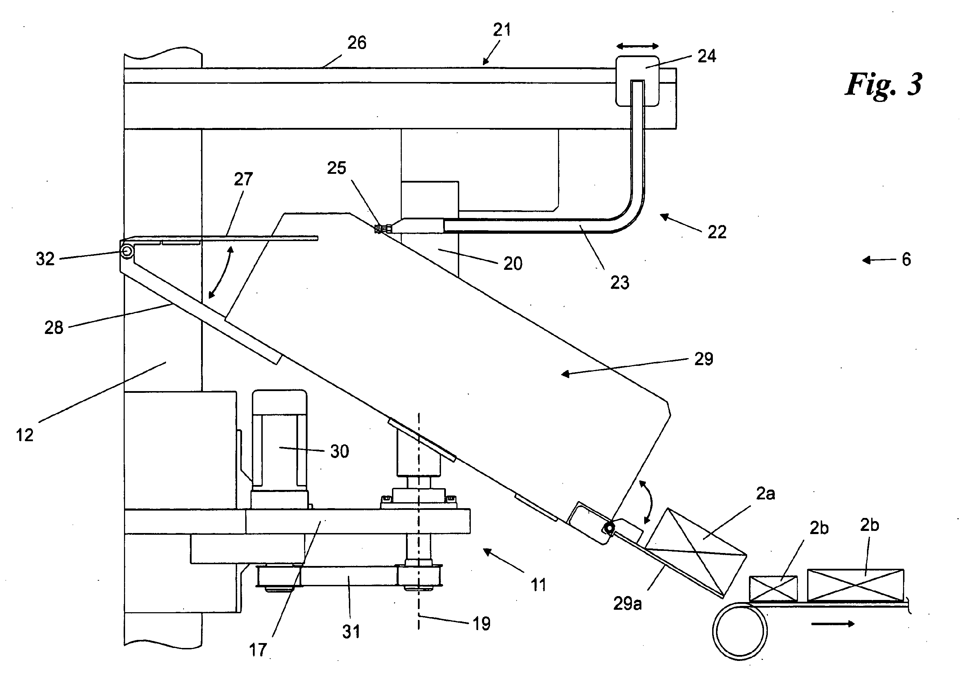

From the above description it can be seen that the collecting container **29** moves together with the handling device 6 and that both the gripper element 22 and the supporting surface **27** and the collecting container 29 are rotatably supported by, and revolve simultaneously around, the vertical axis **19.** The rotation is advantageously at least 180°. It is controlled for example by a motor **30,** supported by the arm **17,** for example by means of a timing belt **31** (Fig. 3).

It should be noted that following this rotation, the gripper element **22** can be moved in directions within an arc of at least 180°.

In its movement from the position indicated by the continuous line to the one indicated by the broken line of Fig. 2, the gripper element **22** pushes the product 2a or 2b, deposited on the supporting surface 27, onto the surface 3a or 3b in order to store the product.

In its movement in the opposite direction, the gripper element **22** takes and withdraws, by suction, the product **2a** or **2b** from the respective surface **3a** or **3b** and transfers it onto the supporting surface 27, or beyond the surface so that it drops into the collecting container **29.**

The combination of a collecting container **29** associated with the handling device 6 advantageously enables said device to perform one single forward and backward stroke for the retrieval of a plurality of products **2a** and/or **2b,** thus speeding up the retrieval operations.

Advantageously, but not necessarily, the supporting surface **27** can be hinged to the slanting arm 28 according to an axis **32** parallel to one side of the surface, so that it can be rotated at an angle between a horizontal position and a slanting position in which the product or products **2a, 2b,** supported on the surface 27 by the gripper element **22,** slide by gravity into the collecting container **29.** The angular rotation of the supporting surface 27 can be controlled for example by a cylinder-piston unit, not shown.

The container **29** advantageously has a mobile front wall **29a,** via which it is possible to discharge the products **2a, 2b** collected in the container **29.**

From the description it can be seen that each handling device 6 is able to serve both the shelf units **4a** and the shelf units **4b** facing onto the same corridor 5, and that it is possible to withdraw, in one single forward and backward stroke, a plurality of products, both of type **2a** with high turnover and of type 2b with low turnover and also both types simultaneously.

This fact permits acceleration of the retrieval and delivery operations, considerably reducing waiting times compared to the known plants and processes in which a forward and backward stroke is required each time for each individual product.

The invention also comprises a process for storage and handling of the products 2 with the system 1 previously described, in which the products 2 to be stored and handled are identified and the products identified are deposited by at least one handling device 6 on at least one storage surface 3. The products are then selectively withdrawn on request from said at least one surface 3 and transferred to at least one delivery area 8.

According to the invention, the products 2 identified comprise high turnover products **2a** and low turnover products **2b;** the high turnover products **2a** are deposited and stored selectively grouped on at least one first storage surface **3a,** while the low turnover products **2b** are deposited and stored on at least one second distinct storage surface **3b,** and during at least one of the retrieval operations several products **2a, 2b** are withdrawn in the same operation. Advantageously the high turnover products **2a** are deposited adjacent to one another in the widthways direction of said first surface **3a** and with the larger side substantially parallel to the longitudinal direction of said first surface **3a.** The low turnover products **2b** are preferably deposited adjacent to one another in the lengthways direction of said second surface **3b** and with the larger side substantially parallel to the width of said second surface **3b.**

As can be deduced in particular from Fig. 4, it is preferable and advantageous for the high turnover products **2a** to be deposited on said first surface **3a** on one side thereof by means of a first handling device 6, and discharged on the opposite side thereof, in particular by said first handling device 6 pushing the products 2a from said one side toward said opposite side, into a collection container 29 associated with a second handling device 6 arranged in the area of said opposite side.

From the same Figure 4 it can be seen that the low turnover products **2b** are deposited and withdrawn from the same side of said second surface **3b** by means of the same handling device 6.

Due to the provision of a collection device in the form of a container 29 combined with the handling device 6 and moving with it, it is possible to simultaneously transfer a plurality of products **2a** and/or **2b,** withdrawn from said first opposite side and/or said second storage surface **3a** and/or **3b,** to said at least one delivery area 8.

For storage of the products **2a, 2b,** the latter are arranged, one at a time, on the supporting surface **27,** positioned in the sorting area 7, at the same angle and in the same position as they will have on the surfaces **3a** or **3b,** according to whether they are high or low turnover products.

The handling device **6** is therefore automatically controlled, by means of a horizontal translation and a vertical translation (or vice versa) and if necessary an angular rotation, in order to deposit one single product **2a, 2b** at a time on the surface **3a** or **3b** allocated to it, with the intervention, by pushing action, of the gripper element **22.**

For retrieval of the products **2a, 2b,** the latter are conveyed individually, by suction by the gripper element **22,** from the surfaces **3a, 3b** onto the surface 27, and from here into the collecting container **29.** Said operation can be repeated several times so as to withdraw a plurality of products each time, in particular high turnover products **2a** from the surface **3a.**

Alternatively the products **2a** can be pushed by the gripper element **22** off the surfaces **3a,** from the side opposite the one from which the gripper element **22** operates, into a collecting container **29** moving along said opposite side.

In this way the products **2a** stored first are also discharged and delivered first, which is particularly important when the products **2a** have an expiry date, since the products stored first are generally those which, after their stay in the warehouse, also have the earliest expiry date.

As shown schematically by the arrows in Fig. 4, the high turnover products **2a** can be discharged, for example for specific sectors, from either side of the shelf unit **4a.** This is not all. In the event of significant variations in the ratio between the percentages of high turnover products **2a** and low turnover products **2b,** for example in the case of an increase in the percentage of the latter out of the total or in the case of an unexpected slower outflow of the low turnover products **2b,** it is possible to reserve for them surfaces **3a** originally allocated to high turnover products **2a,** as indicated for example by the lower sector of the central shelf unit **4a** of Fig. 4.

It should be noted that the invention can also be used to transfer the products **2a, 2b** from one point to another of the shelf units **4a, 4b** of the warehouse. From the above description, it follows that the system and the process according to the invention have a high level of flexibility and adaptation to a huge number of storage requirements.

The possibility of arranging the products both lengthways and widthways with respect to the horizontal longitudinal direction of the shelf units **4** allows for optimal exploitation of the available storage spaces.

The handling device 6, consisting substantially of one single gripper element 22 for the products and a collecting container 29, has a relatively simple structure and guarantees a great operational versatility.

Due to the grouping of the products into high turnover products **2a** and low turnover products **2b,** stored in distinct areas of the warehouse, it is possible to speed up on average the retrieval and delivery operations, since the high turnover products **2a** are on average required in quantities of two or more at a time (identical to or different from one another), and the invention permits withdrawal and delivery of a plurality of these products in one single targeted forward and backward stroke of the handling device 6.

The invention lends itself to the storage and handling of several hundreds or even thousands of different products, in particular in the form of relatively small boxes, for example weighing less than 1-1.5 kg.

The invention is also subject to variations within the scope of the inventive concept.

Thus for example the product handling device could be different from the one described and illustrated, in particular it could be provided with a supporting surface for the products provided with several gripper elements acting in different directions, in particular on a substantially horizontal plane, and the surface could revolve by an angle of less than 180°.

The supporting surface 27 could be structured as a collecting surface for the products taken from the storage surfaces, suitable for supporting also several products withdrawn from the latter, in particular a plurality of high turnover products 2a.

The arrangement of the shelf units could also be different from the one described and illustrated. For example only two shelf units could be provided, one for high turnover products and one for low turnover products, served by one single handling device moving in the corridor formed between them. The shelf unit for the low turnover products could have the same length as the shelf unit for the high turnover products.

The arrangement of the shelf units could furthermore be such that the shelf units of the high turnover products are nearer the delivery area than the shelf units containing the low turnover products.

## Claims

1. System for the storage and handling of products (2), in particular packaged products (2), comprising at least one surface (3) for storage of the products (2), at least one handling device (6) suitable for depositing the products (2) on said at least one storage surface (3) and selectively withdrawing the products (2) from said at least one storage surface (3) and transferring them to at least one delivery area (8), at least one electronic unit (9) for controlling said at least one handling device (6) and for memorising the positions of the individual products (2) deposited on said at least one storage surface (3), means (10) for identification of the individual products (2) to be stored, said identification means (10) being operatively connected to said at least one electronic control unit (9), wherein said electronic control unit (9) is suitable for determining, for each product (2) identified to be stored, whether it is a high turnover product (2a) or a low turnover product (2b), and at least one first storage surface (3a) is provided to house in a selectively grouped manner high turnover products (2a) and at least one second distinct storage surface (3b) to house low turnover products (2b), and wherein said at least one handling device (6) is controlled by said electronic control unit (9) for depositing the high turnover products (2a) on said at least one first storage surface (3a) and the low turnover products (2b) on said at least one second storage surface (3b), **characterised in that** said at least one handling device (6) is suitable for selectively withdrawing both said high turnover products (2a) and said low turnover products (2b) from their respective storage surfaces (3a, 3b), and for withdrawing a plurality at least of said high turnover products (2a) and simultaneously transferring said plurality of products to said at least one delivery area (8).

2. System as claimed in claim 1, wherein said at least one handling device (6) is supported rotatably about an angle of at least 180°.

3. System as claimed in one or more of the preceding claims, wherein said at least one handling device (6) has at least one translating gripper element (22) for engaging said products (2a, 2b).

4. System as claimed in one or more of the preceding claims, wherein said at least one handling device (6) has a surface (27) for collection of said products (2a, 2b) taken by said at least one gripper element (22) from said storage surfaces (3a, 3b), said surface (27) being suitable for supporting a plurality at least of said high turnover products (2a).

5. System as claimed in one or more of the preceding claims, wherein at least one collecting container (29) for said products (2a, 2b) taken by said at least one gripper element (22) from said storage surfaces (3a, 3b) is associated with said at least one handling device (6), said collecting container (29) being suitable for containing a plurality of said products (2a, 2b) and moving together with said at least one handling device (6).

6. System as claimed in one or more of the preceding claims, comprising at least one said first storage surface (3a) positioned centrally and at least two said second storage surfaces (3b) positioned laterally to said first storage surface (3a) with interposition of respective corridors (5) between said first and said second storage surfaces (3a resp. 3b) in which respective handling devices (6) move.

7. Process for the storage and handling of products (2), in particular packaged products (2), with a system (1) as claimed in one of the claims from 1 to 5, wherein the products (2) to be stored and handled are identified, the identified products (2) are deposited by said at least one handling device (6) on at least one storage surface (3), the products (2) are then selectively withdrawn on request by means of said at least one handling device (6) from said at least one storage surface (3) and transferred to at least one delivery area (8), wherein among the products (2) identified, high turnover products (2a) and low turnover products (2b) are distinguished and the high turnover products (2a) are deposited in a selectively grouped manner on at least one first storage surface (3a) and the low turnover products (2b) are deposited on at least one second distinct storage surface (3b), **characterised in that** both said high turnover products (2a) and said low turnover products (2b) are withdrawn from their respective storage surfaces (3a, 3b) by said at least one handling device (6), and **in that** during at least one of the product retrieval operations, a plurality at least of said high turnover products (2a) is withdrawn and simultaneously transferred to said at least one delivery area (8).

8. Process as claimed in claim 7, wherein the high turnover products (2a) are deposited adjacent to one another in the widthways direction of said at least one first storage surface (3a) and with their larger side substantially parallel to the longitudinal direction of said at least one first storage surface (3a).

9. Process as claimed in claim 7, wherein the low turnover products (2b) are deposited adjacent to one another in the lengthways direction of said at least one second storage surface (3b) and with their larger side substantially parallel to the width of said at least one second storage surface (3b).

10. Process as claimed in claim 8, wherein said high turnover products (2a) are deposited on said at least one first storage surface (3a) on one side thereof by a first handling device (6), and are discharged from said at least one first storage surface (3a) by said first handling device (6) pushing said products (2a) from said one side towards the opposite side of said storage surface (3a) into a collecting container (29) associated with a second handling device (6) arranged at said opposite side.

## Patentansprüche

1. System zur Speicherung und Handhabung von Produkten (2), insbesondere von verpackten Produkten (2), bestehend aus mindestens einer Speicherungsfläche (3) der Produkte (2), mindestens einer Handhabungsvorrichtung (6), die in der Lage ist, die Produkte (2) auf die genannte mindestens eine Speicherungsfläche (3) abzulegen und die Produkte (2) von der genannten mindestens einen Speicherungsfläche (3) nach Wahl zu entnehmen und sie in mindestens einen Abgabebereich (8) zu führen, weiters aus mindestens einer elektronischen Einheit (9) für die Steuerung der genannten mindestens einen Handhabungsvorrichtung (6) und zum Speichern der Positionen der einzelnen auf genannte mindestens eine Speicherungsfläche (3) abgelegten Produkten (2), aus Mitteln (10) zum Erkennen der einzelnen zu speichernden Produkte (2), wobei genannte Mittel zum Erkennen (10) mit mindestens einer elektronischen Steuereinheit (9) operativ verbunden sind, in der die genannte elektronische Steuereinheit (9) in der Lage ist, an jedem als speicherungsbedürftig erkannten Produkt (2) zu bestimmen, ob es ein Produkt (2a) mit hoher Umschlagshäufigkeit oder ein Produkt (2b) mit niedriger Umschlagshäufigkeit ist und mindestens eine erste Speicherungsfläche (3a) vorgesehen ist, um Produkte (2a) hoher Umschlagshäufigkeit auf selektiv gruppierte Weise aufzunehmen und mindestens eine zweite separate Speicherungsfläche (3b), um Produkte (2b) niedriger Umschlagshäufigkeit aufzunehmen und in der die genannte Handhabungsvorrichtung (6) von der genannten elektronischen Steuereinheit (9) betätigt wird, um die Produkte (2a) hoher Umschlagshäufigkeit auf die genannte mindestens eine erste Speicherungsfläche (3a) und die Produkte (2b) niedriger Umschlagshäufigkeit auf die genannte mindestens zweite Speicherungsfläche (3b) abzulegen, **dadurch gekennzeichnet, dass** die genannte mindestens eine Handhabungsvorrichtung (6) in der Lage ist, selektiv beide genannte Produkte (2a) hoher Umschlaghäufigkeit und genannte Produkte (2b) niedriger Umschlaghäufigkeit aus den genannten jeweiligen Speicherungsflächen (3a, 3b) zu entnehmen und eine Mehrzahl der genannten Produkte (2a) hoher Umschlagshäufigkeit zu entnehmen und gleichzeitig die genannte Mehrzahl von Produkten in den genannten Abgabebereich (8) zu führen.

2. System nach Anspruch 1, in der die genannte mindestens eine Handhabungsvorrichtung (6) drehbar in einem Winkel von mindestens 180° gelagert ist.

3. Systemnach einem oder mehreren der vorstehenden Ansprüche, in der die genannte mindestens eine Handhabungsvorrichtung (6) mindestens ein verschiebbares Greiforgan (22) zum Ankuppeln der genannten Produkte (2a, 2b) aufweist.

4. System nach einem oder mehreren der vorstehenden Ansprüche, in der die genannte mindestens eine Handhabungsvorrichtung (6) eine Aufnahmeebene (27) für die genannten von dem genannten mindestens einen Greiforgan (22) von den genannten Speicherungsflächen (3a, 3b) entnommenen Produkte (2a, 2b) aufweist, wobei genannte Ebene (27) in der Lage ist, mindestens eine Mehrzahl mindestens der genannten Produkte (2a) hoher Umschlagshäufigkeit zu tragen.

5. System nach einem oder mehreren der vorstehenden Ansprüche, in der die genannte mindestens eine Handhabungsvorrichtung (6) mit mindestens einem Sammelbehälter (29) für die genannten von dem genannten mindestens einem Greiforgan (22) von den genannten Speicherungsflächen (3a, 3b) entnommenen Produkte (2a, 2b) verbunden ist, wobei der genannte Sammelbehälter (29) in der Lage ist, eine Mehrzahl der genannten Produkte (2a, 2b) zu enthalten und zusammen mit der genannten mindestens einen Handhabungsvorrichtung (6) beweglich ist.

6. System nach einem oder mehreren der vorstehenden Ansprüche, umfassend mindestens eine der genannten ersten Speicherungsflächen (3a), die zentraler positioniert ist und mindestens zwei zu der genannten ersten Speicherungsfläche (3a) seitlich angeordnete genannte zweite Speicherungsflächen (3b) mit dazwischen gelegten jeweiligen Gängen (5) zwischen der genannten ersten und der genannten zweiten Speicherungsfläche (3a, 3b), in denen sich die jeweiligen Handhabungsvorrichtungen (6) bewegen.

7. Verfahren zur Speicherung und Handhabung von Produkten (2), insbesondere von verpackten Produkten (2), mit einer System (1) nach einem der Ansprüche von 1 bis 5, in der die zu speichernden und zu bewegenden Produkte (2) identifiziert werden, die identifizierten Produkte (2) von der genannten mindestens einen Handhabungsvorrichtung (6) auf mindestens eine Speicherungsfläche (3) abgelegt werden, die Produkte (2) anschließend selektiv auf Befehl durch die genannte mindestens eine Handhabungsvorrichtung (6) von genannter mindestens einen Speicherungsfläche (3) entnommen und in mindestens einen Abgabebereich (8) geführt werden, in dem unter den identifizierten Produkten (2) Produkte (2a) hoher Umschlagshäufigkeit und Produkte (2b) niedriger Umschlagshäufigkeit unterschieden werden und die Produkte (2a) hoher Umschlagshäufigkeit auf selektiv gruppierte Weise auf mindestens eine erste Speicherungsfläche (3a) abgelegt und die Produkte (2b) niedriger Umschlagshäufigkeit auf eine zweite, separate Speicherungsfläche (3b) abgelegt werden, **dadurch gekennzeichnet, dass** beide genannte Produkte (2a) hoher Umschlagshäufigkeit und genannte Produkte (2b) niedriger Umschlagshäufigkeit aus den jeweiligen Speicherungsflächen (3a, 3b) von der genannten mindestens einen Handhabungsvorrichtung (6) entnommen werden und während mindestens einem der Entnahmevorgänge der Produkte eine Mehrzahl der genannten Produkte (2a) hoher Umschlagshäufigkeit entnommen und gleichzeitig zu der genannten Mehrzahl von Produkten in den genannten Abgabebereich (8) geführt werden.

8. Verfahren nach Anspruch 7, in dem die Produkte (2a) hoher Umschlagshäufigkeit aneinander nach der Breite der genannten mindestens einen ersten Speicherungsfläche (3a) und mit der größeren Seite parallel zu Längsrichtung der genannten mindestens einen ersten Speicherungsfläche (3a) abgelegt werden.

9. Verfahren nach Anspruch 7, in dem die Produkte (2b) niedriger Umschlagshäufigkeit aneinander nach der Länge der genannten mindestens einen zweiten Speicherungsfläche (3b) und mit der größeren Seite im wesentlichen parallel zur Breite der genannten mindestens einen zweiten Speicherungsfläche (3b) abgelegt werden.

10. Verfahren nach Anspruch 8, in dem die Produkte (2a) hoher Umschlagshäufigkeit auf die genannte mindestens eine erste Speicherungsfläche (3a) auf eine Seite von dieser mittels einer ersten Handhabungsvorrichtung (6) abgelegt und von der genannten mindestens einen ersten Speicherungsfläche (3a) mittels der genannten ersten Handhabungsvorrichtung (6) abgeladen werden, indem die genannten Produkten von der genannten Seite zur gegenüberliegenden Seite der genannten Speicherungsfläche (3a) in einen Sammelbehälter (29) geschoben werden, der mit einer an der gegenüberliegenden Seite angeordneten zweiten Handhabungsvorrichtung (6) verbunden ist.

## Revendications

1. Système de stockage et de manipulation de produits (2), en particulier des produits emballés (2), comprenant au moins une surface (3) de stockage des produits (2), au moins un dispositif de manipulation (6) apte à déposer les produits (2) sur ladite au moins une surface (3) de stockage et à enlever sélectivement les produits (2) de ladite au moins une surface (3) de stockage et les faire arriver à au moins une zone de livraison (8), au moins une unité électronique (9) pour la commande dudit au moins un dispositif de manipulation (6) et pour mémoriser les positions des produits individuels (2) déposés sur ladite surface (3) de stockage, des moyens (10) pour l'identification des produits individuels (2) à stocker, lesdits moyens d'identification (10) étant reliés pour leur fonctionnement à ladite au moins une unité électronique (9) de commande, dans lequel ladite unité électronique (9) de commande est apte à déterminer, par chaque produit (2) identifié à stocker, s'il s'agit d'un produit (2a) à haute manipulation ou d'un produit (2b) à basse manipulation, et l'on prévoit au moins une première surface de stockage (3a) pour loger d'une façon sélectivement groupée des produits (2a) à haute manipulation, et au moins une deuxième surface de stockage distincte (3b) pour loger des produits (2b) à basse manipulation, et dans lequel ledit au moins un dispositif de manipulation (6) est commandé par ladite unité électronique (9) de commande pour déposer les produits (2a) à haute manipulation sur ladite au moins une première surface de stockage (3a) et les produits (2b) à basse manipulation sur ladite au moins une deuxième surface de stockage (3b), **caractérisé en ce que** ledit au moins un dispositif de manipulation (6) est apte à enlever sélectivement lesdits produits (2a) à haute manipulation et lesdits produits (2b) à basse manipulation tous les deux de leurs surfaces de stockage (3a, 3b) respectives, et capable de retirer une pluralité desdits produits (2a) à haute manipulation et transférer simultanément ladite pluralité de produit à ladite zone de livraison (8).

2. Système selon la revendication 1, dans lequel ledit au moins un dispositif de manipulation (6) est supporté d'une façon tournante selon un angle d'au moins 180°.

3. Système selon une ou plusieurs des revendications précédentes, dans lequel ledit au moins un dispositif de manipulation (6) présente au moins un organe de préhension (22) susceptible de translation pour accrocher lesdits produits (2a, 2b).

4. Système selon une ou plusieurs des revendications précédentes, dans lequel ledit au moins un dispositif de manipulation (6) présente un plateau (27) de collecte desdits produits (2a, 2b) enlevés desdites surfaces de stockage (3a, 3b) par ledit au moins un organe de préhension (22), ledit plateau (27) étant apte à soutenir une pluralité au moins desdits produits (2a) à haute manipulation.

5. Système selon une ou plusieurs des revendications précédentes, dans lequel ledit au moins un dispositif de manipulation (6) est associé à au moins un récipient de collecte (29) desdits produits (2a, 2b) enlevés desdites surfaces de stockage (3a, 3b) par ledit au moins un organe de préhension (22), ledit récipient de collecte (29) étant apte à contenir une pluralité desdits produits (2a, 2b) et étant mobile ensemble avec ledit au moins un dispositif de manipulation (6).

6. Système selon une ou plusieurs des revendications précédentes, comprenant au moins une desdites premières surfaces de stockage (3a) positionnée au centre et au moins deux dites deuxièmes surfaces de stockage (3b) positionnées latéralement par rapport à ladite première surface de stockage (3a), par l'interposition de couloirs respectifs (5) entre ladite première et lesdites deuxièmes surfaces de stockage (3a, 3b), dans lesquels des dispositifs respectifs de manipulation (6) sont mus.

7. Procédé de stockage et de manipulation de produits (2), en particulier des produits (2) emballés, en utilisant un système (1) selon une des revendications 1 à 5, dans lequel les produits (2) à stocker et manipuler sont identifiés, les produits (2) identifiés sont déposés par ledit au moins un dispositif de manipulation (6) sur au moins une surface (3) de stockage, les produits (2) sont ensuite enlevés sélectivement sur demande, par ledit au moins un dispositif de manipulation (6), de ladite au moins une surface (3) de stockage et transférés à au moins une zone de livraison (8), dans lequel parmi les produits (2) identifiés on repère des produits (2a) à haute manipulation et des produits (2b) à basse manipulation, et les produits (2a) à haute manipulation sont déposés d'une façon sélectivement groupée sur au moins une première surface (3a) de stockage et les produits (2b) à basse manipulation sont déposés sur au moins une deuxième surface (3b) de stockage distincte, **caractérisé en ce que** lesdits produits (2a) à haute manipulation et lesdits produits (2b) à basse manipulation sont tous les deux retirés de leurs surfaces de stockage respectives (3a, 3b) par ledit au moins un dispositif de manipulation (6), et pendant au moins une des opérations d'enlèvement des produits, on enlève une pluralité desdits produits (2a) à haute manipulation et on transfère simultanément ladite pluralité de produits à ladite zone de livraison (8).

8. Procédé selon la revendication 7, dans lequel les produits (2a) à haute manipulation sont déposés attenants les uns aux autres dans le sens de la largeur de ladite au moins une première surface (3a) de stockage et avec le côté de plus grande dimension parallèle à la direction longitudinale de ladite au moins une première surface (3a) de stockage.

9. Procédé selon la revendication 7, dans lequel les produits (2b) à basse manipulation sont déposés attenants les uns aux autres dans le sens de la longueur de ladite au moins une deuxième surface (3b) de stockage et avec le côté de plus grande dimension sensiblement parallèle à la largeur de ladite au moins une deuxième surface (3b) de stockage.

10. Procédé selon la revendication 8, dans lequel les produits (2a) à haute manipulation sont déposés sur ladite au moins une première surface (3a) de stockage, sur un côté de celle-ci, par un premier dispositif de manipulation (6), et sont déchargés d'au moins ladite première surface (3a) de stockage par ledit premier dispositif de manipulation (6), en poussant lesdits produits depuis ledit côté vers le côté opposé de ladite surface (3a) de stockage, dans un récipient de collecte (29) associé à un deuxième dispositif de manipulation (6) disposé sur ledit côté opposé.
